# NEUE EUROPÄISCHE PATENTSCHRIFT

(11) **EP 0 607 370 B2**
(45) Veröffentlichungstag und Bekanntmachung des Hinweises auf die Entscheidung über den Einspruch: **13.02.2002**
(45) Hinweis auf die Patenterteilung: 24.01.1996
(21) Anmeldenummer: 93911474.0
(22) Anmeldetag: 16.04.1993
(51) Int. Cl.: B60T 11/232, B60T 11/20

(54) **KOLBEN MIT ZENTRALVENTIL FÜR HYDRAULISCHE BREMSANLAGEN**
PISTON WITH CENTRAL VALVE FOR HYDRAULIC BRAKING SYSTEMS
PISTON A SOUPAPE CENTRALE POUR SYSTEMES HYDRAULIQUES DE FREINAGE

(30) Priorität: 07.05.1992 DE 4215079; 23.07.1992 DE 4224328
(43) Veröffentlichungstag der Anmeldung: 27.07.1994
(73) Patentinhaber: Continental Teves AG & Co. oHG, 60488 Frankfurt (DE)
(72) Erfinder: BERGELIN, Klaus, D-6272 Niedernhausen (DE); KÖNIG, Harald, D-6352 Ober-Mörlen (DE); LUDWIG, Rudolf, D-6078 Neu-Isenburg (DE); SAALBACH, Kurt, D-6082 Mörfelden-Walldorf (DE); KRAMER, Thomas, D-6942 Mörlenbach (DE); WALTHER, Hans-Jürgen, D-6944 Hemsbach (DE)
(74) Vertreter: Portwich, Peter
(86) Internationale Anmeldenummer: EP9300924
(87) Internationale Veröffentlichungsnummer: WO9322170

(56) Entgegenhaltungen:
- WO-A-92/06875
- DE-A- 3 932 248
- DE-C- 3 712 040
- DE-C- 3 810 447
- GB-A- 2 127 506
- Dichtelemente für Hydraulik und Pneumatik, Katalog Nr.500, Reichelsheim/Simrit, Februar 1982, S.82-83

## Beschreibung

Die Erfindung betrifft einen Kolben der sich aus dem Oberbegriff des Hauptanspruchs ergebenden Gattung. Derartige Kolben sind aus der DE-OS 39 32 248 bekannt.

Als nachteilig bei dem verwendeten Zentralventil wird empfunden, daß bei dem Einbau des Ventileinsatzes, also der Kombination aus Ventilsitz und Stützeinsatz, besondere Sorgfalt verwendetwerden muß. Ist der Ventilstift mit dem Stützeinsatz, beispielsweise durch Vulkanisieren oder Verkleben, nicht besonders zuverlässig verbunden, so kann es geschehen, daß beim Einfügen des gesamten Ventileinsatzes sich der Ventilsitz durch die seitliche Reibung an der Aufnahmebohrung im Kolben vom Stützeinsatz löst. Das kommt daher, daß gegenüber einer axialen Verschiebung der beiden Einsätze nur die Kräfte entgegenwirken können, die durch Reibschluß bzw. die Haftwirkung des Klebers gegeben sind.

Die WO-A-9206875 zeigt ein aus zwei Einzelventilen bestehendes Zentralventil eines Hauptbremszylinders einer blockiergeschützten hydraulischen Bremsanlage. Diese Einzelventile sind in einer gestuften Bohrung eines Kolbens des Hauptbremszylinders hintereinander angeordnet.

Eines der Ventile weist einen metallischen Ventilsitz und einen elastischen Dichtkörper auf, während bei dem anderen Ventil, welches zeitlich vor dem ersten Ventil schließt bzw. nach diesem öffnet, eine Metall-auf-Metall-Dichtung realisiert ist. Dies gewährleistet einen Schutz des elastischen Dichtkörpers vor Zerstörung, die während einer Blockierschutzregelung auftreten könnte. Um die beiden Einzelventile in der Bohrung hintereinander anordnen zu können, ist der Dichtsitz des zweiten Ventils als metallisches, in der Bohrung angeordnetes Einsatzstück ausgebildet. Der elastische Dichtkörper ist am Ventilkörper des ersten Ventils befestigt. Die Herstellung eines derartigen Ventils ist daher relativ aufwendig.

Aus der DE-C1-38 10 447 ist ein elastisches Dichtelement bekannt, welches an die Außenfläche eines rohrförmigen, einseitig mit einem Flansch versehenen Teils angeformt ist. Dabei steht das elastische Dichtelement auf der dem Flansch abgewandten Seite des rohrförmigen Teils etwas über dieses hinaus. Nähert sich ein Ventilelement dem elastischen Dichtelement, so wird dieses zunächst elastisch verformt, bis das Ventilelement am rohrförmigen Teile zur Anlage kommt. Auch hier ist der verhältnismäßig große Produktionsaufwand, insbesondere zur Befestigung mittels eines Sicherungselements, festzustellen.

Die Erfindung geht daher aus von einem Kolben der eingangs genannten Gattung und hat sich zur Aufgabe gestellt, diesen Kolben weiter zu vereinfachen, indem er insbesondere leichter hergestellt und montiert werden kann.

Diese Aufgabe wird durch die sich aus dem kennzeichnenden Teil des Hauptanspruchs ergebenden Merkmale gelöst. Die Erfindung besteht im Prinzip also darin, die Kombination aus Ventilsitz und Stützeinsatz mit in axialer Richtung hinreichenden Hinterschneidungen zu versehen, die die bei der Montage, aber auch während des Betriebs auftretenden axialen Kräfte ohne Schwierigkeiten aufzunehmen vermögen, so daß sich der Ventilsitz gegenüber dem Stützeinsatz nicht in axialer Richtung verschieben kann.

Ferner ist der Durchmesser einer Axialbohrung des Ventileinsatzes größer als der Durchmesser einer sich anschließenden axialen Bohrung des Zentralventil Kanals im Kolben.

Bei dem vorbekannten Ventileinsatz gemäß der DE-OS 39 32 248 ragt der Stützeinsatz mit einem ringförmigen Ende in eine gestufte Bohrung des Kolbens. Um den Ventileinsatz daher montieren zu können, sind spiralförmige Entlüftungsnuten notwendig und hinsichtlich des Ventileinsatzes ergibt sich eine in der Regel unerwünschte doppelte Zentrierung. Die hierfür notwendigen genauen Fertigungstoleranzen lassen sich nur schwer herstellen. Andererseits soll dieser Ventileinsatz gleichzeitig zur maßhaltigen Führung des Ventilstößels verwendet werden. Wendet man dieses Prinzip auf den vorliegenden Ventilsitz an, so müßte der Stößel durch zwei miteinander fluchtende Bohrungen geführt werden. Hierdurch könnten sich Schwierigkeiten ergeben, die durch die Merkmalskombination gemäß Anspruch 1 beseitigt werden. Der Ventilstößel wird somit nur in der Axialbohrung des Kolbens geführt, so daß die Wände des axialen Kanals gleichzeitig als Führungsflächen dienen.

Um weitere Vereinfachungen zu schaffen, empfiehlt sich die Anwendung der in Anspruch 2 aufgeführten Merkmalskombination. Mit anderen Worten bedeutet dies, daß auf den ringförmigen Ansatz am Stützeinsatz und damit auf eine durchgehende Führung des Ventilstößels innerhalb dieses Stützeinsatzes verzichtet wird, wodurch der Ventileinsatz in beiden axialen Lagen verbaubar wird. Hinzukommt, daß die Dichtwirkung des Ventileinsatzes gegenüber der Kolbenbohrung noch erhöht wird, da durch die beidseitige Dichtfläche auch die Stirnfläche des Ventileinsatzes zur Abdichtung gegenüber der Kolbenbohrung am Boden dieser Bohrung beiträgt. Der Ventileinsatz wird durch die genannte Maßnahme auch einfacher hergestellt, da die Lage des Stützeinsatzes während der Verbindung mit dem Ventilsitz gleichgültig ist.

Bei dem bekannten Zentralventil gemäß DE-OS 39 32 248 ist der Ventilkörper mit einem ringförmigen Vorsprung versehen, um die Dichtwirkung zu erhöhen. Nachteile können dabei sein, daß durch die starren Kanten des Ventilkörpers der Dichtsitz des Ventilsitzes unter Umständen verletzt werden kann. Als nachteilig wird weiterhin angesehen, daß der ringförmige Vorsprung sehr genau gefertigt werden muß, so daß hier in der Regel eine Nachbearbeitung notwendig sein wird. Zwar ließe sich hier durch besonders maßgenaue Gießverfahren, wie beispielsweise Aluminium-Druckguß, Abhilfe schaffen, für derartige Verfahren sind aber die Herstellungskosten hoch. Als Abhilfe hierzu wird in Verbesserung der Erfindung die Merkmalskombination nach Anspruch 3 vorgeschlagen. Die erhöhte Dichtwirkung wird also hier durch Angießen eines ringförmigen Vorsprungs an den Ventilsitz erreicht. Durch diese Maßnahme ist es möglich, den Ventilkörper in einfacher Weise als geschlagenes Stahiteil auszuführen und auf ein Gußverfahren zu verzichten.

Wird hierbei der Ventileinsatz symmetrisch ausgeführt, so empfiehlt sich in Verbesserung der Erfindung die Verwendung der Merkmale nach Anspruch 4. Da bei symmetrischem Aufbau des Ventileinsatzes jede der beiden Stirnflächen des Ventilsitzes mit einem ringförmigen Vorsprung versehen ist, stellt die ringförmige Aufnahmeausnehmung eine Möglichkeit dar, die Maßhaltigkeit des Ventileinsatzes gegenüber dem Kolben zu verbessern. Außerdem werden mögliche Axialkräfte, die von dem am Boden der Bohrung eingepreßten ringförmigen Vorsprung ausgehen könnten, von dem Ventileinsatz femgehalten.

Beim Angießen des Ventilsitzes an den Stützeinsatz muß dieser zuvor in eine Form eingespannt werden. Um hierbei die axiale Bohrung des Stützeinsatzes nicht zu verletzen, wird die Anwendung der Merkmale nach Anspruch 5 empfohlen.

Um die erfindungsgemäße Hinterschneidung zwischen Ventilsitz und Stützeinsatz zu erreichen, sind eine ganze Reihe von Ausformungen des Stützeinsatzes möglich. Eine besonders einfache und zuverlässig wirkende Ausformung beschreibt die Merkmalskombination nach Anspruch 6. Ein derart ausgeformter Stützeinsatz läßt sich besonders einfach durch ein Gußvedahren oder Preßverfahren gewinnen.

Anspruch 7 beschreibt eine weitere Möglichkeit zur Ausgestaltung des Stützeinsatzes, durch den sich eine erhöhte Festigkeit, insbesondere in axialer Richtung erreichen läßt.

Als Materialkombination hat sich die Verwendung von Aluminium sowohl für den Stützeinsatz, als auch den Kolben selbst bewährt. Dabei ist der Aufbau der Einzelteile zueinander so gewählt, daß durch den aus einem anderen Material, nämlich vorzugsweise Stahl, gefertigten Ventilkörper keine nachteiligen Folgen entstehen. Hilfsweise kann es sich empfehlen, die aufeinander gleitenden Flächen unterschiedlichen Metalls durch Beschichtung voneinander zu isolieren, was beispielsweise durch Vernickein, durch Verzinken o.ä. geschehen kann.

Erfindungsgemäße Kolben werden in Hauptbremszylindern mit Zentralventil für blockiergeschützte, hydraulische Bremsanlagen (ABS) benötigt. Bei diesen Bremsanlagen besteht die Schwierigkeit, daß das Zentralventil auch unter Druck geöffnet werden muß. Hierdurch besteht die Gefahr, daß der aus relativ weichem elastischen Material bestehende Ventilsitz durch die auftretenden Strömungskräfte an dem sich öffnenden Ventil beschädigt wird. Die in diesem Zusammenhang bestehende Problematik ist ausführlich in der DE-OS 40 40 271 beschrieben worden. Weiterhin ist in der DE-OS 40 32 873 eine Lösung angegeben worden, bei der zwei Ventile in Reihe geschaltet wurden. Ein anderer in diesem Zusammenhang gemachter Vorschlag (DE-A-42 23 353, veröffentlicht am 20.01.94) geht dahin, die Funktion des das Zentralventil schützenden zweiten Ventils durch eine einfache oder über Differenzdruck steuerbare Blende zu ersetzen.

Eine weitere Aufgabe der Erfindung besteht darin, den Aufbau des Zentralventils einschließlich der zugehörigen weiter oben erläuterten Schutzeinrichtungen sowohl hinsichtlich der Zuverlässigkeit und Geschwindigkeit der Arbeitsweise des Zentralventils zu verbessern als auch das Zentralventil beim Öffnen gegen hohen Druck in der Arbeitskammer besser zu schützen. Dabei kann das gattungsgemäße Zentralventil mit einzelnen der weiter oben beschriebenen Merkmale oder deren Kombination versehen sein.

Diese Aufgabe wird durch die sich aus dem kennzeichnenden Teil des Anspruchs 9 ergebende Merkmalskombination gelöst. Die Erfindung besteht im Prinzip also darin, für das gattungsgemäße Zentralventil eine steuernde Schutzeinrichtung vorzusehen, welche die über das Zentralventil, insbesondere beim Druck im Arbeitszylinder, maximal fließende Druckmittelmenge begrenzt.

Dabei kann nach vorteilhaften Weiterbildungen der Erfindung die steuernde Schutzeinrichtung als feststehende Blende, aber auch als dynamische Blende ausgeführt sein. Einzelheiten hierzu sind näher in der P 42 23 353 erläutert.

Eine andere vorteilhafte Weiterbildung der Erfindung kann in der Anwendung eines vorgeschalteten Schutzventils bestehen, wie es im Prinzip beispielsweise in der DE-OS 40 32 873 erörtert ist. Zusätzliche vorteilhafte Weiterbildungen sind hierzu in den Unteransprüchen 13 bis 22 aufgeführt

Zwei Ausführungsbeispiele der Erfindung werden nachfolgend anhand der Abbildungen beschrieben.

Dabei zeigen:
- Fig. 1: einen erfindungsgemäßen Kolben mit Zentralventil
- Fig. 2: einen erfindungsgemäßen Kolben mit zusätzlichem Schutzventil
Zunächst wird ein erfindungsgemäßer Kolben anhand der Fig. 1 erläutert. Dabei wird auf die DE-OS 39 32 248 Bezug genommen, und die einzelnen Elemente eines Hauptzylinders, insbesondere eines Tandemhauptzylinders, werden nur soweit erläutert, wie sie von dem dort beschriebenen Zylinder abweichen.

Der in abgeschnittener Darstellung gezeigte Kolben 1, der beispielsweise der Druckstangenkolben oder der Sekundärkolben eines Tandem-Hauptzylinders sein kann, ist mit einer Stufenbohrung 2 versehen, die sich aus einem ersten Bohrungsabschnitt großen Durchmessers (Hohlraum 3) und einem hierzu gestuften zweiten Bohrungsabschnitt 4 mit geringfügig vermindertem Durchmesser und einem dritten Bohrungsabschnitt (zentraler Kanal 5) stark verminderten Durchmessers zusammensetzt.

Die Zeichnung zeigt einen Ventileinsatz 6, zu dem ein Ventilsitz 7 sowie ein Stützeinsatz 8 gehört. Der Ventilsitz 7 ist auf den Stützeinsatz 8 vulkanisiert bzw. gegossen. Um die Aufnahme axialer Kräfte zwischen Ventilsitz und Stützeinsatz 8 zu verbessern, ist der Stützeinsatz 8 mit einem ringförmigen Bund 9A, 9B versehen. Die Zeichnung zeigt hinsichtlich des Bundes zwei Versionen, die wahlweise verwendet werden können. Auf der rechten Seite der Zeichnung ist ein Bund 9A mit rechteckförmigem Querschnitt gezeigt, der vorzugsweise angewendet wird. Eine andere Möglichkeit besteht darin, den Bund 9B, wie auf der linken Seite der Zeichnung gezeigt, mit einer im wesentlichen konischen Form zu versehen, die in einen rechteckförmigen Abschnitt übergeht.

Der Ventileinsatz 6 ist zu seiner quer zur Längsachse der Bohrung 3 liegenden Mittelebene hin symmetrisch aufgebaut, so daß er in beiden Lagen verbaut werden kann. Die Axialbohrung 10 des Stützeinsatzes 8 hat einen größeren Durchmesser als der zentrale Kanal 5. An den beiden Enden der Axialbohrung 10 ist diese mit zwei ringförmigen Ausnehmungen 11 und 12 versehen, die bei der Herstellung des Ventileinsatzes 6 verhindern sollen, daß die Bohrung 10 sich an ihren Enden beim Fertigungsprozeß verjüngt.

Der Ventilsitz 7 trägt zumindest an einer seiner beiden Stirnflächen 15,16 einen ringförmigen Vorsprung 13, der zur verbesserten Abdichtung gegenüber einem Ventilkörper 17 dient. Auf der rechten Seite der Zeichnung ist eine symmetrische Ausgestaltung hinsichtlich des ringförmigen Vorsprungs dargestellt, so daß der Ventilsitz 7 in diesem Falle die ringförmigen Vorsprünge 13 und 14 besitzt. Dabei ist es vorteilhaft, wenn der Kolben 1 am Boden des zweiten Bohrungsabschnittes 4 mit einer entsprechenden ringförmigen Aufnahme 18 versehen ist, um für die Stirnfläche 16 eine glatte Anlagefläche am Boden des Bohrungsabschnittes zu schaffen. Es ist aber auch möglich, entsprechend der linken Seite der Zeichnung auf die ringförmige Aufnahme 18 zu verzichten. In diesem Falle ist es auch vorteilhaft, wenn der Ventilsitz nur einseitig einen ringförmigen Vorsprung 13 besitzt. Eine vollkommene Symmetrie des Ventileinsatzes 6 ist in diesem Falle nicht mehr gegeben.

Der Ventilkörper 17 ist mit einem Stößel 19 versehen. Dabei ist der Durchmesser der Axialbohrung 10 so viel größer als der Durchmesser des zentralen Kanals 5 gewählt, daß der Stößel 19 an der Mantelfläche des zentralen Kanals 5 geführt ist. Da der Kanal 5 gleichzeitig auch als Druckmittelkanal dient, stützt sich der Stößel 19 nur mit Hilfe von vorzugsweise drei Stegen 20 an den Bohrungswänden ab. Die Stege 20 verlaufen in Längsrichtung der Achse der Stufenbohrung 2 und sind gleichmaßig auf dem Umfang des Stößels verteilt.

Der Ventilkörper 17 ist mittels einer Spiralfeder 21 gegenüber dem Ventilsitz 7 vorgespannt, wobei die Feder 21 sich an dem Kolben mittels eines Stützrings 22 abstützt, der mit dem Kolben 1 verstemmt oder in einer anderen Weise dauerhaft fixiert ist. Der Stützring 22 kann aber auch in eine entsprechende Nut eingerastet sein, um den Ausbau des Zentralventils zu vereinfachen.

Hinsichtlich der Materialien besteht der Kolben 1 und Stützeinsatz 8 aus Aluminium, während der Ventilkörper 17 aus Stahl gepreßt, beispielsweisegeschmiedet oder geschlagen ist.

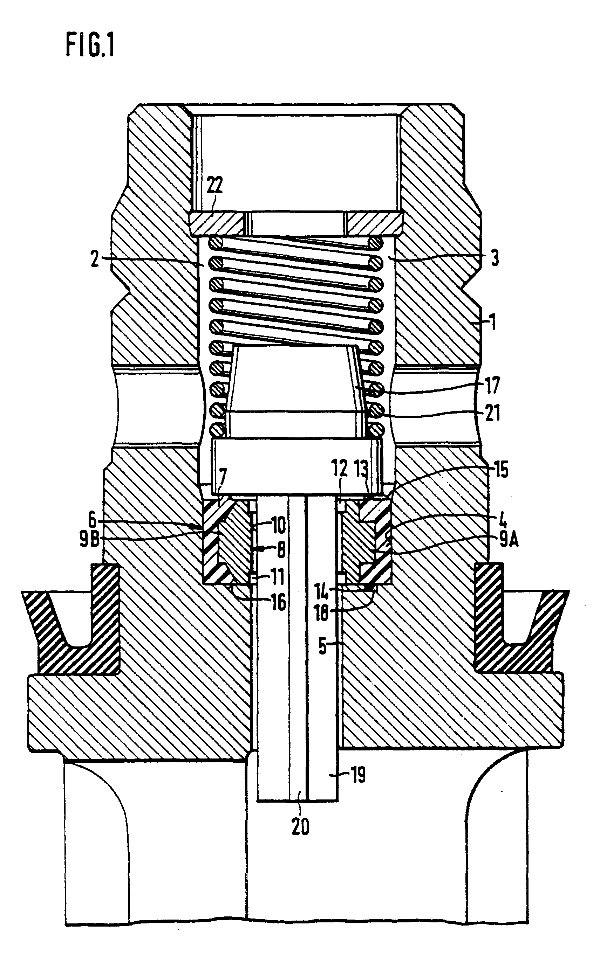

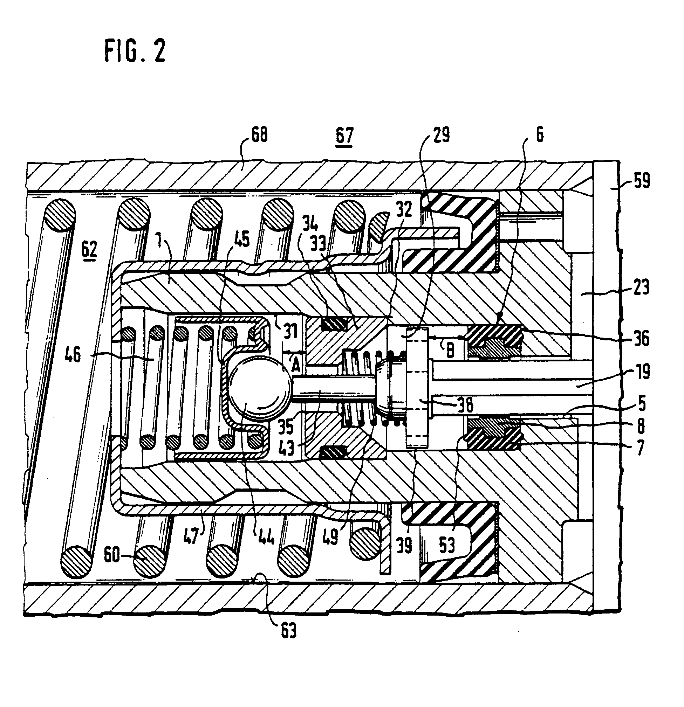

Ein Ausführungsbeispiel der Erfindung mit Schutzeinrichtung wird nachfolgend anhand der Fig. 2 erläutert. Dabei wird hinsichtlich des Zentralventils auf die Beschreibung zu Fig. 1 und hinsichtlich der Ausgestaltung des Schutzventils auf die DE-OS 40 32 873 verwiesen.

Der Hauptbremszylinder 67 besteht aus einem Gehäuse 68 mit einer Sackbohrung 63, in der ein Kolben 1 dichtend geführt ist.

Eine Feder 60 ist zwischen einem nicht dargestellten Sekundärkolben und dem Kolben 1 angeordnet

In dem Kolben 1 ist ein Zentralventil 6,38 angeordnet. Eine genauere Beschreibung der Zentralventile erfolgt weiter unten.

Ein Stößel 19 erstreckt sich in der Achse des Kolbens 1 und dient, wie weiter unten erläutert wird, als Betätigung für das Zentralventil 6,38. Der Stößel 19 liegt an einem nur teilweise dargestellten Querstift 59 an und hält das Zentralventil 6,38 offen.

Der Kolben 1 begrenzt eine Arbeitskammer 62, die mit den Bremskreisen und mit dem Ausgang der Pumpe verbunden ist.

Der Stößel 19 ist in einer engen Längsbohrung geführt, die gleichzeitig dem Druckmittelaustausch zwischen der Arbeitskammer 62 einerseits und einem Vorratsbehälter andererseits dient. Damit ein ungestörter Druckmittelausgleich stattfindet, kann eine Ausgleichsbohrung 23 in dem Kolben 1 vorgesehen sein, die sich im wesentlichen quer zur Längsachse des Kolbens erstreckt Ersatzweise kann auch der Stößel 19 mit Längsnuten versehen werden.

Der Kolben 1 ist mit einer mehrfach gestuften Längsbohrung 31 versehen, die sich von der Stirnseite, die den Arbeitsraum 62 begrenzt, bis zur Ausgleichsbohrung 23 erstreckt. Die größte Stufe der Längsbohrung findet sich im unmittelbaren Anschluß an die Stirnseite zum Arbeitsraum 62. Dieser Abschnitt endet an einer Stufe 32, an der ein zylinderförmiges Einsatzstück 33 abgestützt ist. Das Einsatzstück 33 ist mit einer Dichtung 34 versehen, die das Einsatzstück am Außenmantel abdichtet, womit lediglich ein Druckmittelfluß durch den zentralen Kanal des Einsatzstücks 33 erlaubt ist. Das Einsatzstück 33 kann auch auf Grund einer speziellen Außenkontur dichtend in die Bohrung eingedrückt werden. Der zentrale Kanal ist an seinen dem Arbeitsraum 62 zugewandten Ende mit einem gehärteten Ventilsitz 35 versehen. Vom Einsatzstück 33 ausgehend erstreckt sich ein weiteres Stück der Längsbohrung 31 bis zu einer zweiten Stufe 36, die eine ringförmige Fläche aufweist. An die zweite Stufe 36 schließt sich ein abschließender Kanal 5 an, in dem der Betätigungsstößel 19 geführt ist. Vom Kanal 5 zweigt auch die Ausgleichsbohrung 23 ab. Dies ermöglicht es, den Kanal 5 zumindest in Teilbereichen sehr eng auszuführen, so daß er als Führung für den Stößel 19 dienen kann.

Im Raum zwischen der ersten Stufe 32 und der zweiten Stufe 36 ist ein Schließkörper 38 angeordnet, an den der Stößel 19 angeformt ist. Der Durchmesser des SchlieBkörpers 38 entspricht im wesentlichen dem Durchmesser dieses Teilstückes der Längsbohrung 31, so daß eine Führung gegeben ist. Ein Druckmittelfluß am Schließkörper 38 vorbei wird durch Durchlässe 39 am Außenrand des Schließkörpers 38 realisiert.

Das Zentralventil besitzt als beweglichen Sitz den Schließkörper 38 aus Stahl, der zwischen einen Betätigungsstift 43 und den Stößel 19 eingefügt ist. Dieser bewegliche Schließkörper 38 wirkt mit einem Ventileinsatz 6 zusammen, der in die zweite Stufe 36 der Längsbohrung 31 eingesetzt ist Dabei besteht der ortsfeste Ventileinsatz 6 im wesentlichen aus einem ringförmigen Ventilsitz 7, der auf einem Stützeinsatz 8 aufgebracht ist. Nähere Einzelheiten hierzu sind zu Fig. 1 erläutert. Der Stützeinsatz 8 bildet gleichzeitig einen Anschlag für den beweglichen Schließkörper 38. Eine ringförmig sich in Richtung zu dem Schließkörper 38 erstreckende Wulst 53 sorgt für die notwendige Dichtung des Zentraiventils 6,38 in dessen geschlossenem Zustand. Der Abstand zwischen dem Wulst 53 und der Schließfläche des Schließkörpers 38 wird mit B bezeichnet.

Der Betätigungsstift 43 ragt durch den zentralen Kanal des Einsatzstückes 33 hindurch und liegt an einer Ventilkugel 44 an, die mit dem Ventilsitz 35 zusammenwirkt. Die Ventilkugel 44 wird gehalten von einem Führungselement 45, an dem eine Feder 46 abgestützt ist. Diese Feder 46 stützt sich auf ihrer anderen Seite an einer Hülse 47 ab, die auf den Kolben 1 aufgesetzt ist. Anzumerken ist auch, daß zwischen dem Einsatzstück 33 und dem Schließkörper 38 eine Feder 49 abgestützt ist, die ebenso wie die Feder 46 dafür sorgt, daß das jeweilige Ventil sicher schließt.

Die Verbindung des Ventilkörpers 38 mit dem Betätigungsstift 43 ist so abgestimmt, daß in der Grundstellung des Zentralventils das erste Ventil, gebildet aus Ventilkugel 44 und Ventilsitz 35 einen ersten Öffnungsabstand A aufweist, während das zweite Ventil, gebildet aus dem Ventilsitz 7 bzw. dem Wulst 53 und dem Schließkörper 38, einen zweiten Öffnungsabstand B aufweist. Der erste Öffnungsabstand A ist kleiner als der zweite Öffnungsabstand B.

Der Kolben 1 des Hauptbremszylinders arbeitet wie folgt: Die Figur zeigt einen unbetätigten Zustand des Hauptbremszylinder d.h. das Zentralventil befindet sich in einem geöffneten Zustand. Der Kolben 1 befindet sich in seiner Grundposition, der Stößel 19 liegt am zugehörigen Querstift 59 an, so daß der am Kolben 1 ausgebildete Ventilsitz 35 sich im Abstand zur Ventilkugel 44 befindet. Es besteht eine Druckmittelverbindung zwischen der Arbeitskammer 62 und dem Vorratsbehälter. Wird nun das Bremspedal betätigt, so verschiebt sich der Druckstangenkolben 1 unter Einfluß der Pedalkraft in der Zeichnung nach links und nimmt über die Feder 60 einen nicht gezeigten Sekundärkolben mit. Die Kolben werden also relativ zum Gehäuse 68 verschoben, während der Stößel 11, der Schließkörper 38, der Betätigungsstift 43 und die Ventilkugel 44 relativ zum Gehäuse des Hauptbremszylinders nicht verschoben werden. Die Federn halten die Ventilkörper in ihrer Position. Sobald der Kolben 1 den ersten Öffnungsabstand A zurückgelegt hat, legt sich der Ventilsitz 35 an die Ventilkugel 44 an, so daß die obengenannte Verbindung Zwischen der Arbeitskammer 62 auf der einen Seite und dem Vorratsbehälter auf der anderen Seite unterbrochen wird. In der Arbeitskammer 62 kann nun bei weiterer Verschiebung des Kolbens ein Druck aufgebaut werden.

Wird der Kolben 1 weiter nach links bewegt, so löst sich der Betätigungsstift 43 von der Ventilkugel 44, und der Ventilsitz 38 nähert sich dem Wulst 53. Sobald der Kolben 1 den zweiten Öffnungsabstand B zurückgelegt hat, schließt auch das Zentralventil 6,38. Dies geschieht drucklos, da in dem Zwischenraum zwischen den beiden Einzelventilen kein Druck aufgebaut ist. Es erfolgt somit keine Beschädigung des aus Gummi oder einem anderen geeigneten Dichtmaterial bestehenden Ventilsitzes 7.

Solange das erste Schutzventil 44,35 sicher schließt, ist das Verhalten des Zentralventils 6,38 ohne Bedeutung.

In einem Regelvorgang, wenn von der Pumpe Druckmittel in die Arbeitskammer 62 gefördert wird, wird der Kolben 1 zurück auf seine Grundposition geschoben. Dann öffnet zunächst wieder das Zentralventil 6,38 und als nächstes das Schutzventil 44,35. Nun kann Druckmittel über das sich öffnende Schutzventil 44,35 und an dem offenen Zentralventil 6,38 - der Öffnungsspalt beträgt B minus A - vorbeifließen. Wegen des zunächst noch geschlossenen Schutzventils 44,35 ist die über das Zentralventil 6,38 abfließende Druckmittelmenge begrenzt, so daß eine Zerstörung der Gummidichtung (Ventilsitz 7) vermieden wird. Der sich einstellende kleine Druckabbau in der Arbeitskammer 62 führt dazu, daß der Arbeitskolben 1 wiederum nach links geschoben wird und das Schutzventil 44,35 schließt. Infolgedessen läuft ein Regelvorgang ab, der aus schnell aufeinanderfolgenden Öffnungs- und Schließvorgängen des Schutzventils 44,35 besteht. Dann kann letztlich soviel Druckmittel über das Ventil abfließen, wie von der Pumpe in den Hauptzylinder gefördert wird. Der Hauptzylinderdruck entspricht dabei dem Pedaldruck.

### Bezugszeichenliste

- 1: Kolben
- 2: Stufenbohrung
- 3: Hohlraum
- 4: Bohrungsabschnitt
- 5: zentraler Kanal
- 6: Ventileinsatz
- 7: Ventilsitz
- 8: Stützeinsatz
- 9A: ringförmiger Bund
- 9B: ringförmiger Bund
- 10: axiale Bohrung
- 11: ringförmige Ausnehmung
- 12: ringförmige Ausnehmung
- 13: ringförmiger Vorsprung
- 14: ringförmiger Vorsprung
- 15: Stirnfläche
- 16: Stirnfläche
- 17: Venfilkörper
- 18: ringförmige Aufnahme
- 19: Stößel
- 20: Steg
- 21: Spiralfeder
- 22: Stützring
- 23: Ausgleichsbohrung
- 29: Zwischenraum
- 31: Länasbohrung
- 32: Stufe
- 33: Einsatzstück
- 34: Dichtung
- 35: Ventilsitz
- 36: Stufe
- 38: Schließkörper
- 39: Durchlaß
- 43: Betätigungsstift
- 44: Ventilkugel
- 45: Führungselement
- 46: Feder
- 47: Hülse
- 48: -
- 49: Feder
- 53: ringförmiger Wulst
- 59: Querstift
- 60: Feder
- 62: Arbeitskammer
- 63: Sackbohrung
- 67: Hauptbremszylinder
- 68: Gehäuse

## Patentansprüche

1. Kolben (1) mit Zentralventil (6,17) für hydraulische Fahrzeugbremsanlagen mit einem im Kolben (1) gebildeten Hohlraum (3), der am Kolbenende offen ist, einem vom Hohlraum (3) aus in Richtung auf das andere Kolbenende durchgehenden zentralen Kanal (5), einem am Anfang des zentralen Kanals (5) eingesetzten Ventileinsatz (6) der einen festen Stützeinsatz (8) und einen ringförmigen elastischen Ventilsitz (7) aufweist, welcher zumindest an der Mantelfläche eines ringförmigen Bundes (9A bzw. 9B) des Stützeinsatzes (8) anliegt, **dadurch gekennzeichnet, dass** die beiden Stirnflächen des Bundes (9A bzw. 9B) von dem Ventilsitz (7) vollständig umschlossen sind und dass der Durchmesser einer Axialbohrung (10) des Ventileinsatzes (6) größer als der Durchmesser einer sich anschließenden axialen Bohrung (5) des Zentralkanals im Kolben (1) ist und dass ein Stößel (19) eines Ventilkörpers (17) des Zentralventils in der sich anschließenden zentralen Bohrung (5) im Kolben geführt ist.

2. Kolben nach Anspruch 1, **dadurch gekennzeichnet. daß** der Ventileinsatz (6) zu einer quer zur Kanalachse verlaurenden Mittelebene des Bundes (9) symmetrisch auigebaut ist.

3. Kolben nach Anspruch 1 oder 2, dadurch **gekennzeichnet.** daß der Ventilsitz (7) zumindest an seiner zum Ventilkörper (17) hin weisenden Stirnfläche (15) mit einem in dessen Richtung weisenden ringförmigen Vorsprung (13) versehen ist.

4. Kolben nach Anspruch 2 und 3, dadurch **gekennzeichnet,** daß am Boden einer den Ventileinsatz (6) aufnehmenden Stufenbohrung (4) eine ringförmige Auinahme (18) zur Aufnahme des ringförmigen Vorsprungs (14) vorgesehen ist.

5. Kolben nach einem der vorangegangenen Ansprüche, **dadurch gekennzeichnet, daß** die axiale Bohrung (10) des Stützeinsatzes (8) an ihren Enden mit ringförmigen Ausnehmungen (11,12) versehen ist.

6. Kolben nach einem der vorangegangenen Ansprüche, dadurch **gakennzeichnet**. daß der ringförmige Bund (9A) einen rechtecktörmigen Querschnitt besitzt.

7. Kolben nach einem der vorangegangenen Ansprüche, dadurch **gekennzelchnet,** daß die Mantelfläche des Stützeinsatzes (8) zwischen dem Bund (9B) und den Stirrifiächen (15,16) zur Stirnfläche hin konisch verjüngt ist.

8. Kolben nach einem der vorangegangenen Ahsprüche, **dadurch gekennzeichnet, daß** der Stützeinsätz (8) aus Aluminium, der Ventilkörper (17) aus Stahl und der Kolben (1) aus Aluminium gefertigt ist.

9. Kolben nach einem der vorhergehenden Ansprüche, **dadurch gekennzeichnet. daß** in Richtung von einer Arbeitskammer (62) am offenen Kolbenende zum zentralen Kanal hin eine die zum Zentralventil (6,38) strörnende Druckmittelmenge steuernde Schutzeinrichtung (35,44) (dem Zentralventil (6,38)) vorgeschaltet ist.

10. Kolben nach Anspruch 9. **dadurch gekennzeichnet, daß** als steuernde Schutzeinrichtung eine Blende vorgesehen ist.

11. Kolben nach Anspruch 10, **dadurch gekennzeichnet, daß** als Blende eine dynamische Blende vorgesehert ist.

12. Kolben nach Anspruch 9, dadurch **gekennzeich.** net. daß als steuernde Einrichtung ein dem zentralen Ventil vorgeschaltetes Schutzventil (35,44) vorgesehen ist.

13. Kolben nach Anspruch 12, **dadurch gekennzeichnet, daß** das Schutzventil, das die Verbindung zwischen der Arbeitskammer (62) und einem Zwischenraum (29) kontrolliert, vor dem zweiten Ventil (Zentralventil 6,38) schließt.

14. Kolben nach Anspruch 13, **dadurch gekennzeichnet, daß** das Schutzventil (35,44) aus einem Ventilsitz (35) und einem Venti Ischließkörper (44) besteht. wobei beicls Teile aus Metall sind, und daß das zweite Ventil (6,38) ebenfalls aus einem Ventilsitz (6) und einem Ventilkörper (38) besteht, wobei mindestens der Ventilsitz (6) eine Dichtung (7) aus weichelastischem Material aufweist.

15. Kolben nach einem der Ansprüche 12 bis 14, **dadurch gekennzeichnet, daß** beide Ventile (6,38 und 25,44) im Arbeitskolben (1) ausgebildet sind. wobei die Veritilsitze (6,35) beider Ventile Teile des Arbeitskolbens (1) sind.

16. Kolben nach Anspruch 15, **dadurch gekennzeichnet, daß** der Ventilsitz (35) des ersten Ventils (35,44) an einem Einsatzstück (33) ausgebildet ist. das mit dem Arbeitskolben (1) fest verbunden ist.

17. Kolben nach einem der Ansprüche 12 bis 16, **dadurch gekennzeichnet, daß** durch eine Sackbohrung (63) eines Hauptbremszylinders (67) ein Querstift (59) gesteckt ist, an den ein Betätigungsstößel (19) für die Ventile anlegbar ist.

18. Kolben nach Anspruch 17, **dadurch gekennzeichnet, daß** der Schließkörper (38) des zweiten Ventils an einem Ventilträger (19,43) ausgebildet ist an dem der Betätigungsstößel (19) angeformt ist, der an den Querstift (59) anlegbar ist.

19. Kolben nach einem der Ansprüche 12 bis 18, **dadurch gekennzeichnet, daß** der Ventiltiäger (19,43) für das zweite Ventil (6,38) mit einem Betätigungsstitt (43) für das erste Ventil (35,44) verbunden ist.

20. Kolben nach einem der Ansprüche 12 bis 19, **dadurch gekennzeichnet, daß** der Betätigungsstift (43) für das erste Ventil (35,44) und der Ventilträger (19,43) miteinander unverrückbar verbindbar sind, und daß sie vor einer Verbindung zu Justierzwecken gegeneinander verschiebbar sind.

21. Kolben nach Anspruch 12, **dadurch gekkennzeichnet, daß** in der Grundstellung des Zentralventils (6.38) der Ventilkörper (44) des ersten Ventils einen Abstand A zu seinem Ventilsitz (35) aufweist und der Ventilkörper (38) des zweiten Ventils einen Abstand B zum Ventilsits (6.53) aufweist, wobei der Abstand A kleiner ist als der Abstand B.

22. Kolben nach einem der Ansprüche 12 bis 21, **dadurch gekennzeichnet, daß** der Ventilkörper (44) des ersten Ventils (35,44) aus einer Ventilkugel (44) besteht, und daß der Schließkörper (38) des zweiten Ventils (6,38) aus einern Stahlzylinder besteht.

## Claims

1. Piston (1) with a central valve (6, 17) for use in hydraulic vehicle brake systems, comprising a cavity (3) formed in the piston (1) and open at one piston end, a central duct (5) passing through from the cavity (3) in the direction of the other piston end, a valve case (6) inserted at the beginning of the central duct (5) and having a rigid supporting insert (8) and an annular elastic valve seat (7) which abuts at least on the peripheral surface of an annular collar (9A or 9B, respectively) of the supporting insert (8),
**characterized in that** the two end surfaces of the collar (9A or 9B, respectively) are enclosed completely by the valve seat (7), and **in that** the diameter of an axial bore (10) of the valve case (6) is larger than the diameter of a subsequent axial bore (5) of the central duct in the piston (1), and **in that** a tappet (19) of a valve member (17) of the central valve is guided in the subsequent central bore (5) in the piston.

2. Piston as claimed in claim 1,
**characterized in that** the valve case (6) is designed symmetrically relative to a median plane of the collar (9) which extends transversely to the axis of the central duct.

3. Piston as claimed in claim 1 or 2,
**characterized in that**, at least at its end surface (15) showing to the valve member (17), the valve seat (7) includes an annular projection (13) showing to the valve member's direction.

4. Piston as claimed in claim 2 and 3,
**characterized in that** an annular receptacle (18) for receiving the annular projection (14) is provided on the bottom of a stepped bore (4) which accommodates valve case (6).

5. Piston as claimed in any one of the preceding claims,
**characterized in that** the axial bore (10) of the supporting insert (8) includes at its ends annular recesses (11, 12).

6. Piston as claimed in any one of the preceding claims,
**characterized in that** the annular collar (9A) has a rectangular cross-section.

7. Piston as claimed in any one of the preceding claims,
**characterized in that** the peripheral surface of the supporting insert (8) tapers conically towards the end surface between the collar (9B) and the end surfaces (15, 16).

8. Piston as claimed in any one of the preceding claims,
**characterized in that** the supporting insert (8) is made of aluminum, the valve member (17) is made of steel, and the piston (1) is made of aluminum.

9. Piston as claimed in any one of the preceding claims,
**characterized in that** a protection device (35, 44) for governing the quantity of pressure fluid flowing to the central valve (6, 38) is connected upstream of the central valve (6, 38) in the direction from a working chamber (62) at the open piston end to the central duct.

10. Piston as claimed in claim 9,
**characterized in that** a restrictor is provided as the controlling protection device.

11. Piston as claimed in claim 10,
**characterized in that** the restrictor is a dynamic restrictor.

12. Piston as claimed in claim 9,
**characterized in that** a protection valve (35, 44) connected upstream of the central valve is provided as the controlling device.

13. Piston as claimed in claim 12,
**characterized in that** the protection valve governs a connection between a working chamber (62) and an interspace (29) and closes before the second valve (central valve 6, 38).

14. Piston as claimed in claim 13,
**characterized in that** the protection valve (35, 44) comprises a valve seat (35) and a valve closure member (44), both parts being made of metal, and **in that** the second valve (6, 38) also comprises a valve seat (6) and a valve member (38), and at least the valve seat (6) comprises a seal (7) made of a soft-elastic material.

15. Piston as claimed in any one of the claims 12 to 14,
**characterized in that** both valves (6, 38 and 25, 44) are designed in the working piston (1), and the valve seats (6, 35) of both valves are parts of the working piston (1).

16. Piston as claimed in claim 15,
**characterized in that** the valve seat (35) of the first valve (35, 44) is provided on an insert member (33) which is rigidly coupled to the working piston (1).

17. Piston as claimed in any one of the claims 12 to 16,
**characterized in that** a transverse pin (59) is inserted to extend through a blind-end bore (63) of a master brake cylinder (67), and an actuating tappet (19) for the valves is movable into abutment on said pin.

18. Piston as claimed in claim 17,
**characterized in that** the closing member (38) of the second valve is provided on a valve carrier (19, 43) whereat the actuating tappet (19) is shaped which is movable into abutment on the transverse pin (59).

19. Piston as claimed in any one of the claims 12 to 18,
**characterized in that** the valve carrier (19, 43) for the second valve (6, 38) is connected with an actuating pin (43) for the first valve (35, 44).

20. Piston as claimed in any one of the claims 12 to 19,
**characterized in that** the actuating pin (43) for the first valve (35, 44) and the valve carrier (19, 43) are adapted to be coupled to each other so as to be immovable, and **in that** prior to their coupling they are movable relative to each other for adjustment purposes.

21. Piston as claimed in claim 12,
**characterized in that**, in the basic position of the central valve (6, 38), the valve member (44) of the first valve has a distance A to its valve seat (35) and the valve member (38) of the second valve has a distance B to the valve seat (6, 53), the distance A being smaller than the distance B.

22. Piston as claimed in any one of the claims 12 to 21,
**characterized in that** the valve member (44) of the first valve (35, 44) comprises a valve ball (44), and **in that** the closing member (38) of the second valve (6, 38) comprises a steel cylinder.

## Revendications

1. Piston (1) à valve centrale (6, 17) pour système de freinage hydraulique pour véhicule, comprenant une cavité (3), pratiquée dans le piston (1) et s'ouvrant à l'extrémité du piston, un conduit central (5), qui s'étend d'une manière continue à partir de la cavité (3) en direction de l'autre extrémité du piston, une partie rapportée de valve (6), placée au début du conduit central (5) et comprenant une pièce rapportée de soutien (8) fixe et un siège de valve (7) annulaire élastique qui prend appui au moins sur la surface périphérique d'une partie en surépaisseur annulaire (9A ou 9B) de la pièce rapportée de soutien (8), **caractérisé en ce que** les deux surfaces frontales de la partie en surépaisseur (9A ou 9B) sont sensiblement entourées par le siège de valve (7), **en ce que** le diamètre d'un alésage axial (10) de la partie rapportée de valve (6) est supérieur au diamètre d'un alésage axial (5) du conduit central pratiqué dans le piston (1), s'y raccordant, et **en ce que** une tige-poussoir (19) d'un siège de valve de la valve centrale est guidée dans l'alésage central s'y raccordant (5) à l'intérieur du piston.

2. Piston suivant la revendication 1, **caractérisé en ce que** la partie rapportée de valve (6) a une structure symétrique vis-à-vis d'un plan médian de la partie en surépaisseur (9) qui s'étend transversalement à l'axe du conduit.

3. Piston suivant la revendication 1 ou 2, **caractérisé en ce que** le siège de valve (17) comporte, au moins sur sa surface frontale (15) qui fait face à l'obturateur (17), une partie en saillie (13) qui est orientée en direction de cet obturateur.

4. Piston suivant les revendications 2 et 3, **caractérisé en ce qu'**au fond d'un alésage étagé (4) servant à loger la partie rapportée de valve (6), il est prévu une partie en retrait (18) annulaire servant à loger la partie en saillie (14) annulaire.

5. Piston suivant l'une quelconque des revendications précédentes, **caractérisé en ce qu'**un alésage axial (10) de la pièce rapportée de soutien (8) comporte, à ses extrémités, des parties en retrait (11, 12) annulaires.

6. Piston suivant l'une des revendications précédentes, **caractérisé en ce que** la partie en surépaisseur (9A) annulaire présente une section transversale rectangulaire.

7. Piston suivant l'une des revendications précédentes, **caractérisé en ce que** la surface périphérique de la pièce rapportée de soutien (8) va en rétrécissant d'une manière conique en direction de la surface frontale, entre la partie en surépaisseur (9B) et les surfaces frontales (15, 16).

8. Piston suivant l'une des revendications précédentes, **caractérisé en ce que** la pièce rapportée de soutien (8) est en aluminium, l'obturateur (17) en acier et le piston (1) en aluminium.

9. Piston suivant l'une des revendications précédentes, **caractérisé en ce qu'**un dispositif de protection (35, 44) commandant le débit d'agent de pression qui s'écoule vers la valve centrale (6, 38) est disposé en amont (de la valve centrale (6, 38)) suivant la direction allant d'une chambre de travail (62), située à l'extrémité ouverte du piston, vers le conduit central.

10. Piston suivant la revendication 9, **caractérisé en ce qu'**un orifice calibré est prévu en tant que dispositif de protection commandant le débit.

11. Piston suivant la revendication 10, **caractérisé en ce qu'**un orifice calibré dynamique est prévu en tant qu'orifice calibré.

12. Piston suivant la revendication 9, **caractérisé en ce qu'**une valve de protection (35, 44) disposée en amont de la valve centrale, est prévue en tant que dispositif commandant le débit.

13. Piston suivant la revendication 12, **caractérisé en ce qu'**une valve de protection, qui contrôle la communication entre la chambre de travail (62) et un espace intermédiaire (29) se ferme avant la seconde valve (valve centrale 6, 38).

14. Piston suivant la revendication 13, **caractérisé en ce que** la valve de protection (35, 44) est constituée d'un siège de valve (35) et d'un obturateur de valve (44), les deux pièces étant en métal, et **en ce que** la seconde valve (6, 38) est aussi constituée d'un siège de valve (6) et d'un obturateur (38), au moins le siège de valve (6) comportant une garniture d'étanchéité (7) en une matière à élasticité souple.

15. Piston suivant l'une des revendications 12 à 14, **caractérisé en ce que** les deux valves (6, 38 et 25, 44) sont réalisées dans le piston de travail (1), les sièges de valve (6, 35) des deux valves constituant des parties du piston de travail (1).

16. Piston suivant la revendication 15, **caractérisé en ce que** le siège de valve (35) de la première valve (35, 44) est réalisé sur une pièce rapportée (33) qui est fixée à demeure sur le piston de travail (1).

17. Piston suivant l'une des revendications 12 à 16, **caractérisé en ce qu'**une tige transversale (79), sur laquelle une tige-poussoir (19) d'actionnement des valves peut être appliquée, est emboîtée en travers d'un alésage borgne (63) d'un maître-cylindre de frein (67).

18. Piston suivant la revendication 17, **caractérisé en ce que** l'obturateur (38) de la seconde valve est réalisé sur un porte-valve (19, 43) sur lequel est réalisé au formage la tige-poussoir d'actionnement (19) qui peut être appliquée sur la tige transversale (59).

19. Piston suivant l'une des revendications 12 à 18, **caractérisé en ce que** le porte-valve (19, 43) associé à la seconde valve (6, 38) est relié à une tige d'actionnement (43) associée à la première valve (35, 44).

20. Piston suivant l'une des revendications 12 à 19, **caractérisé en ce que** la tige d'actionnement (43) associée à la première valve (35, 44) et le porte-valve (19, 43) sont agencés de façon à pouvoir être reliés entre eux d'une manière définitive et **en ce qu'**ils sont agencés de façon à pouvoir être déplacés l'un vis-à-vis de l'autre, à des fins d'ajustement, préalablement à leur solidarisation.

21. Piston suivant la revendication 12, **caractérisé en ce que**, dans la position de base de la valve centrale (6, 38), l'obturateur (44) de la première valve présente un espacement A vis-à-vis de son siège de valve (35) et l'obturateur (38) de la seconde valve présente un espacement B vis-à-vis du siège de valve (6, 53), l'espacement A étant inférieur à l'espacement B.

22. Piston suivant l'une des revendications 12 à 21, **caractérisé en ce que** l'obturateur (44) de la première valve (35, 44) consiste en un obturateur sphérique de valve (44) et **en ce que** l'obturateur (38) de la seconde valve (6, 38) consiste en un cylindre en acier.
